# EUROPEAN PATENT APPLICATION

(11) **EP 4 796 950 A1**
(43) Date of publication of application: **26.08.2026**
(21) Application number: 25159766.2
(22) Date of filing: 24.02.2025
(51) Int. Cl.: G01S 7/00, G01S 7/481, G01S 7/497, G01S 7/51, G01S 17/42, G01S 17/86, G01S 17/89

(54) **REALITY CAPTURE DEVICE FOR STATIONARY AND HANDHELD REALITY CAPTURE**

(71) Applicant: Leica Geosystems AG, 9435 Heerbrugg (CH)
(72) Inventor: HERBST, Christoph, 6850 Dornbirn (AT)
(74) Representative: Kaminski Harmann

(57) **Abstract**

The invention relates to a reality capture device (1) for generating a digital representation of an environment (2). The device comprises a laser scanner (3) configured to carry out a scanning movement of a laser measurement beam (4).

The reality capture device comprises an upper portion (8) and a lower portion (9). A laser scanner (3) and an imaging arrangement (7) are comprised by the upper portion (8). The upper portion (8) is fixed on the lower portion (9) such that it is rotatable about a support rotation axis (10). The reality capture device is configured to have two scanning modes. In a stationary scanning mode the upper portion rotates about the support rotation axis relative to the lower portion and the laser scanner is set to move the measurement beam only relative to one of its two rotation axes. In a dynamic scanning mode, the laser scanner is set such that the measurement beam (4) is moved relative to both of the two rotation axes (5, 6), whereas the upper portion (8) is configured to be fixed on the support rotation axis (10) such that it does not rotate about the support rotation axis (10) relative to the lower portion (9).

## Description

### FIELD OF THE INVENTION

The present invention relates to a reality capture device for generating a digital three-dimensional representation of an environment, particularly for surveying and/or for detecting an object within an infrastructure.

### BACKGROUND OF THE INVENTION

A three-dimensional measurement of rooms and environments is of great interest to craftsmen and architects, for example, since this allows to rapidly capture an actual condition and/or the construction progress of rooms or a construction site so that pending work can be scheduled. By means of a digital visualization of the actual state, e.g. in the form of a point cloud or a vector file model, or by means of an augmented reality functionality different options for further steps or expansion options can be examined and optionally presented to an employee or a customer in an easily accessible way.

An environment can be optically scanned and measured using a laser scanner. A common approach to this involves a scanning of the environment by means of pulsed electromagnetic radiation, e.g. laser light, wherein an echo is received from a backscattering surface point of the environment and, for example, on the basis of the transit time, the shape, and/or the phase of the pulse a distance to the surface point is derived and in each case associated with the spatial position of the surface point, for example using angle information at the time of the measurement and using the known location of the laser scanner.

Therefore, a plurality of measuring points may be recorded and spatially measured by means of at least one rotating beam deflection element for variation of the alignment of the emission direction of the distance measurement beam, e.g. a plane mirror inclined with respect to an axis of rotation. Therein, a desired point-to-point resolution is achieved by adjustment of the pulse rate of the distance measurement beam and/or by adjusting the rotational speed of the beam deflection element. The environment can then be analyzed and/or displayed in different ways based on the plurality of measurement points using common data processing steps and/or display methods, in particular as a 3D point cloud.

Typically, scanning laser scanners have one or two mutually orthogonal axes of rotation, for example a vertical axis of rotation for a comparatively slow rotation of the entire laser scanner, often also referred to as "azimuth axis" or "slow axis", and a horizontal axis of rotation perpendicular thereto for a high-speed rotating beam deflection element. Due to the high rotation speeds of the beam deflection element frequently used, the second axis is also referred to as "the fast axis" or "elevation axis".

For additional information, the laser scanner data may be combined with camera data, in particular to provide high-resolution spectral information, e.g. by means of an RGB camera or an infrared camera.

In some cases, distance measurement modules used in laser scanners for spatial measurement have an intensity sensitivity but no color sensitivity, which means the 3D point cloud generated can be displayed in grayscale levels without the need to use additional data. Using a referencing of the "gray" 3D point cloud with RGB data from a color camera, for example a "colored" 3D point cloud can be generated, which makes, for example, its display considerably easier to the human eye. The referencing of different data and data sets, such as those from temporally and spatially varying measurement procedures, is nowadays increasingly standardized.

Laser scanners can also be designed with a position and orientation system, for example by means of an inertial system, tilt sensors or a receiver for a global satellite navigation system, for example wherein local sensing data are automatically referenced with a global 3D coordinate system.

Often, reality capture devices are configured to autonomously create a 3D map of a new environment, e.g. by means of a simultaneous localization and mapping (SLAM) functionality. The three-dimensional model data may then be analyzed by means of a feature recognition algorithm for automatically recognize semantic and/or geometric features captured by the probing data, e.g. by means of using shape information provided by virtual object data from a CAD model. Such feature recognition, particularly for recognizing geometric primitives, are nowadays widely used to analyze 3D data.

In many cases, laser scanners are positioned stationarily during the measurement process. Then, by means of the aforementioned position and orientation system, the absolute location of the point measurements may be determined. Usually, the laser scanner is therefore stationarily positioned in a scene. Depending on the size and complexity (such as due to obstructions and occlusions) of the environment that is to be captured, multiple repetitions of the measurement process may be necessary in order to capture the full environment with sufficient coverage. The data that is captured by the plurality of measurements during the workflow, such as point-cloud data, need to be combined in order to provide a complete model of the environment. In terms of point-cloud data this process is oftentimes referred to as "point-set registration" or "point cloud registration". This registration can be a computationally expensive and complex task. Furthermore, a measurement campaign might take up a lot of time and work, as the device must be moved and set up a plurality of times and each measurement process might take several minutes. Even though this process might be optimized by an ideal selection of measurement positions, a whole measurement campaign to capture an environment might need a substantial amount of manual labor.

In other cases, reality capture devices may be mobile and configured to provide surveying data and referencing data at the same time, e.g. wherein at least trajectory data of the device, e.g. position and/or pose data, are provided with the probing data, e.g. laser scanner data and/or camera data, such that probing data of different positions of the reality capture device can be combined into a common coordinate system. This brings the advantage that a measurement campaign can be conducted in considerably less time compared to stationary devices. However, usually this comes at the cost of a lower resolution and/or data quality.

It is noted that in further cases, capturing images and conducting laser measurements would oftentimes be done in sequence. Otherwise, the movement of the camera, which is used for capturing images or videos, might result in motion blur or other unwanted phenomena. Especially fast movements or a lack of sufficient lighting might increase such effects. Hence, the scanning process might take a longer time due to the sequential capturing of images and laser scanning measurements and might be limited to well-lit scenes.

### OBJECT OF THE INVENTION

In view of the above circumstances, it is an object of the present invention to provide improved reality capture with a device that allows for hybrid operation such that static and dynamic utilization is possible.

This object is achieved by the realization of at least part of the characterizing features of the independent claims. Features which further develop the invention in an alternative or advantageous manner can be found in some of the other features of the independent claims and in the dependent claims.

### SUMMARY OF THE INVENTION

One aspect of the invention relates to a reality capture device for generating a digital representation of an environment. The reality capture device comprises a laser scanner configured to carry out a scanning movement of a laser measurement beam relative to two rotation axes, and, based thereof, to generate light detection and ranging data for generating a three-dimensional point cloud. Furthermore, it comprises an imaging arrangement, in particular at least one color camera, for recording image data.

According to this aspect of the invention, the reality capture device comprises an upper portion and a lower portion. The laser scanner and the imaging arrangement are comprised by the upper portion and arranged such that the scanning movement of the laser measurement beam is provided relative to the upper portion. The imaging arrangement is fixedly arranged on the upper portion. The upper portion is fixed on the lower portion such that it can rotate about a support rotation axis. The reality capture device is configured to have two scanning modes, a stationary scanning mode and a dynamic scanning mode. In the stationary scanning mode, the upper portion rotates about the support rotation axis relative to the base and the laser scanner is set to move the measurement beam only relative to one of its two rotation axes. In the dynamic scanning mode, the laser scanner is set that the measurement beam is moved relative to both of the two rotation axes, whereas the upper portion is configured to be fixed on the support axis such that it does not rotate about the support rotation axis relative to the lower portion.

The terms azimuthal axis and elevation axis are herein used to describe two axes that are orthogonal to each other, wherein the azimuthal axis is primarily oriented vertically whereas the elevation axis is primarily oriented horizontally. However, it is noted that these terms are merely used as naming means and the two axes might not stay in the same orientation during operation.

It is noted that the terms "upper portion" and "lower portion" are merely used as naming means and it is not mandatory that the upper portion is arranged above the lower portion. Embodiments or arrangements with the upper portion being positioned below the lower portion or on the side of the lower portion could be possible as well.

The imaging arrangement is fixedly arranged on the upper portion and moves with the upper portion. The imaging arrangement can comprise 2D sensors. Certain embodiments might comprise 3D sensors, such as time-of-flight cameras.

In some embodiments of the invention, the reality capture device is configured to have a third scanning mode. The third scanning mode might comprise the upper portion rotating about the support rotation axis relative to the lower portion and the laser scanner being set such that the measurement beam is moved relative to both of the two rotation axes. In certain embodiments the measurement beam might be moved such that the rotation of the upper portion relative to the lower portion is at least partially compensated.

In other words, based on the two completely independent axes, drives and angle encoders, the azimuthal axis and the support rotation axis can be moved independently of each other. The rotation of the upper portion about the support rotation axis might be fully compensated by the azimuthal axis. The measurement beam therefore remains unaffected in the azimuth direction. The imaging arrangement that might be fixedly arranged on the upper portion therefore rotates about the support axis, whereas the measurement beam of the laser scanner remains essentially unaffected due to the compensation of the rotation. Movement of the measurement beam additional to the compensation movement allows to conduct the identical scanning patterns to an operation without a rotating upper portion but while the upper portion rotates such that imagery can be captured.

Devices according to prior art would usually record point cloud data and imagery one after another. A well-known improvement of this is the video mode, with which images can also be taken simultaneously during scanning. However, this comes with a disadvantage of motion blur, especially if the surroundings are not sufficiently bright. The use is therefore limited to bright environments, while HDR recordings are not possible at all. The third scanning mode, as outlined above, makes it possible to achieve fast scans, consisting of producing point cloud data and panoramic images simultaneously that may overcome these limitations.

In certain embodiments, the laser scanner might be set such that the measurement beam is moved in a scanning pattern. It is noted that, particularly for better accuracy, the movement of the measurement beam is principally effected by the movement about the two rotation axes of the laser scanner. In embodiments that comprise the third scanning mode, the laser scanner might be set such that the scanning pattern of the measurement beam is not affected by a rotation of the upper portion about the support rotation axis. This rotation might not be steady but, for example, a stop-and-go motion, wherein the rotation of the upper portion might be stopped while the imaging arrangement is set to capture imagery, in order to reduce unwanted effects such as motion blur. Without compensating the rotation of the upper portion for the movement of the measurement beam, the scanning pattern of the measurement beam would be distorted, as the laser scanner is comprised by the upper portion. Hence, even though the upper portion might rotate irregularly, the laser scanner might be set to provide a steady rotation of the measurement beam to achieve the scanning pattern.

In certain embodiments of the invention, the reality capture device might comprise one or more timeframes during which the functionality described by one of the scanning modes is active. In other words, the functionality of the active scanning mode might not always be active when the reality capture device is switched on but is active during the one or more timeframes.

In some embodiments of the invention, the laser scanner comprises a base, an alidade, and a rotating body. Therein, the alidade might be configured to rotate about one of the two rotation axes of the laser scanner, azimuthal axis. Further, the rotating body might be mounted on the alidade and configured to rotate relative to the alidade about the other of the two rotation axes of the laser scanner, elevation axis. The azimuthal axis and the elevation axis might be orthogonal to each other. The laser scanner might be configured such that the rotating body is configured for deflecting the laser measurement beam coming from the alidade.

The generation of the LIDAR data might comprise a continuous rotation of the rotating body relative to the upper portion and, for the stationary scanning mode, a continuous rotation of the upper portion relative to the lower portion. The generation of the LIDAR data might further comprise an emission of the laser measurement beam via the laser scanner, which continuously rotates, and detection of parts of the laser measurement beam returning via the rotating body.

According to some embodiments of the invention, the azimuthal axis might be parallel to the support rotation axis. In certain embodiments the azimuthal axis might be coaxial to the support axis. The imaging arrangement might comprise multiple cameras, wherein the cameras are oriented to have a sideways viewing direction, particularly orthogonal to the support rotation axis. In certain embodiments, the imaging arrangements might comprise wide-angle cameras. In certain embodiments the imaging arrangement might comprise fish-eye cameras.

According to some embodiments of the invention, the rotational frequencies of the rotating body about the elevation axis of rotation and the azimuthal axis of rotation, and the rotational frequency of the upper portion about the support rotation axis might depend on the scanning mode. In certain embodiments, in the stationary scanning mode, a rotation speed of the upper portion about the support rotation axis might be relatively slow compared to a rotation speed of the rotating body about the azimuthal axis in the dynamic scanning mode. In certain embodiments, the rotation speed of the upper portion about the support rotation axis might be less than half of the rotational speed of the elevation axis.

According to some embodiments of the invention, the lower portion might comprise an interface configured to be connected to a counterpart. In certain embodiments, the counterpart might be embodied as part of a tripod.

According to some embodiments, the invention might further comprise a base station. The base station might comprise the counterpart, wherein the interface might be configured to provide transmission of at least one of electrical signals, optical signals, electrical energy, thermal currents between the base station and the lower and/or upper portion. In certain embodiments, the base station might be embodied as part of a tripod.

According to some embodiments, the device might further comprise a first and a second power source. The first power source might be comprised by the upper portion or the lower portion and the second power source might be comprised by the base station. In certain embodiments, the second power source might have a larger capacity than the first power source.

According to some embodiments, the device might further comprise first processing means and second processing means. The first processing means might be comprised by the upper portion or the lower portion and the second processing means might be comprised by the base station. In certain embodiments, the second processing means might comprise more processing power than the first processing means.

According to some embodiments, the device might comprise data transmission means, such as wired or wireless transmission means. In certain embodiments, the data transmission means might be comprised by the base station. In further embodiments, the data transmission means might comprise at least one of a wireless transmission module, a wired transmission module, or an optical transmission module.

According to some embodiments, the device might further comprise thermal control means. In certain embodiments, at least a part of the thermal control means might be comprised by the base station and the reality capture device might be configured such that when the reality capture device is connected to the base station via the interface, at least parts of the reality capture device are being thermally controlled and/or the thermal control means area operated with higher intensity for the stationary scanning mode.

According to some embodiments, the device might be configured to transmit data and/or energy between the lower portion and the base station via the interface. In certain embodiments, the transmission might be initiated automatically after connecting the base with the base station.

According to some embodiments, the device might comprise a handle for being carried by a mobile carrier. The handle might be detachably mounted on the lower portion or the interface. In certain embodiments, the handle might be magnetically detachable, and/or comprise an additional power source.

According to some embodiments, the device might comprise a dome that is mounted on the upper portion such that the dome and the upper portion encase all moving parts of the laser scanner, such that from the outside no moving parts are touchable. In certain embodiments, the dome might be opaque for visible light.

According to some embodiments, at least part of the imaging arrangement might be comprised by the dome. In certain embodiments the at least one color camera might be comprised by the dome.

According to some embodiments, a central reference point of the laser scanner might be defined as the origin for distance and angle measurement. Said origin might be specified by the intersection point of the azimuthal axis of rotation with the elevation axis of rotation. Further, at least part of the imaging arrangement might be arranged such that a virtual backwards extension of its optical axis passes through the central reference point. In certain embodiments, the at least one color camera might be arranged such that its virtual backwards extension of its optical axis passes through the central reference point.

In other words, at least part of the imaging arrangement might be fixedly arranged on the upper portion, particularly the dome, and a virtual backward extension of the optical axis of the surface sensor passes through the central reference point. Furthermore, the imaging arrangement has a stationary field of view relative to the upper portion and facing away from the upper portion, in the sense that the field of view of the sensor changes during the measurement process only in the event of a movement of the upper portion, in particular a rotation of the upper portion about the support axis of rotation, or in the event of an operator carrying the laser scanner.

One embodiment relates for example to the fact that a multiplicity of color cameras is arranged on the upper portion, particularly the dome, wherein for at least part of the color cameras the virtual backward extension of its optical axis substantially passes through the central reference point.

According to some embodiments, the laser scanner might further comprise a reference element. The reference element might be configured such that it provides at least one of a defined distance in relation to the laser scanner, a reflective intensity, or a contrast value.

According to some embodiments, the laser scanner might be configured to carry out the scanning movement in such a way that during a complete revolution about at least one of the two rotational axes the measurement beam passes over the reference element.

According to some embodiments, the device might further comprise a localization unit and might be configured for generating localization data for determining a trajectory of the reality capture device. In certain embodiments, the localization unit might comprise an inertial measurement unit. In further embodiments, the localization unit might be attached to the upper portion or the lower portion. In other embodiments, a trajectory might be determined during the dynamic scanning mode.

According to some embodiments, the processing means might be configured to conduct a simultaneous localization and mapping algorithm. In certain embodiments, the simultaneous localization and mapping algorithm might comprise a lidar-based simultaneous localization and mapping algorithm and/or a visual-based simultaneous localization and mapping algorithm.

According to some embodiments, the reality capture device might be configured to provide instructions to the mobile carrier. In certain embodiments, the instruction might comprise navigational information or directions.

According to some embodiments, the reality capture device might be configured to provide data registration when capturing data from more than one of the operation modes.

### BRIEF DESCRIPTION OF THE DRAWINGS

The aspects of the invention are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
Fig. 1: Figure 1 shows an embodiment of the reality capture device comprising an upper portion and a lower portion, whereas the upper portion comprises an imaging arrangement and a laser scanner;
Fig. 2a-d: Figure 2a, 2b, and 2c show further embodiments of the invention, whereas the reality capture device might further comprise an interface that is connected to a counterpart whereas the reality capture device depicted in Figure 2d comprises a, in certain embodiments detachable, handle that is connected to the upper portion;
Fig. 3: Figure 3 shows the reality capture device of Fig. 2c in a mobile operation mode;
Fig. 4: Figure 4 shows the reality capture device of Figure 2b in a stationary operation mode;
Fig. 5: Figure 5 shows the reality capture device embodied such that part of the imaging arrangement is comprised by the dome; and
Fig. 6: Figure 6 shows the reality capture device that is placed on a structure in an environment.

### SPECIFIC EMBODIMENTS OF THE INVENTION

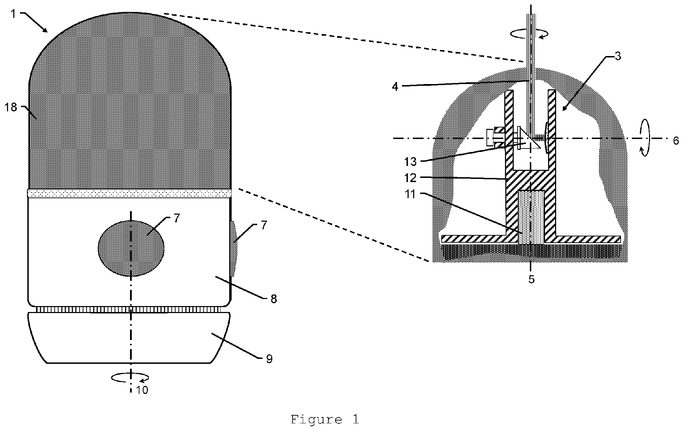

Figure 1 shows an embodiment of the reality capture device 1 comprising an upper portion 8 and a lower portion 9. The upper portion 8 further comprises a laser scanner 3 and an imaging arrangement 7. In this exemplary embodiment, the laser scanner 3 is shown to be covered by a dome 18.

The laser scanner 1 according to the invention is configured to conduct scanning movements relative to two rotation axes 5, 6. These axes are therefore arranged orthogonal to each other. As a result, a three-dimensional point cloud might result.

The upper portion 8 is rotatably fixed on the lower portion 9 such that it rotates about the support axis of rotation 10. As the imaging arrangement 7 is comprised by the upper portion 8, it rotates with the upper portion 8 about said axis of rotation.

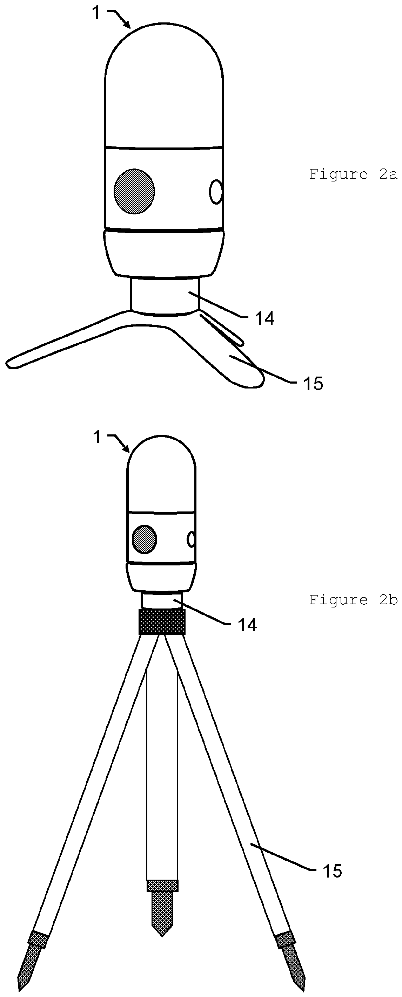

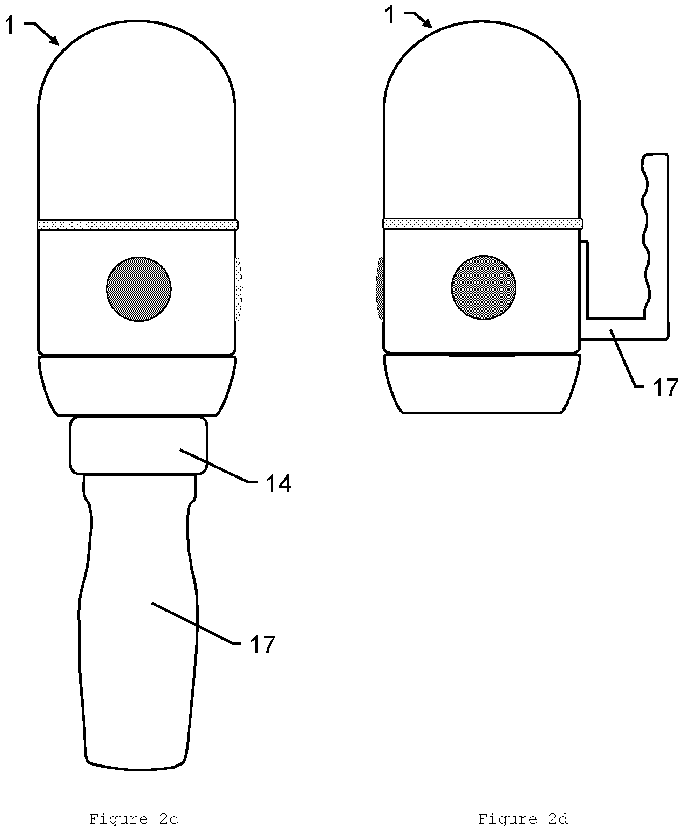

Figures 2a-d show the reality capture device of Figure 1, whereas in figures 2a, 2b, and 2c the device further comprises an interface 14. In these exemplary embodiments, the interface 14 is configured to be connected to a counterpart 15. In Figures 2a and 2b the counterpart 15 is embodied as part of a tripod that might be used for static operation of the device. In Figure 2c the counterpart might be embodied as part of a handle 17 such that it can be carried by a mobile carrier 18, for example, during dynamic operation of the device.

Such exemplary embodiments might further comprise the counterpart 15 to be comprised by a base station. In certain embodiments the base station might be configured to further comprise a second power source, second processing means, data transmission means, and/or thermal control means.

Figure 2d depicts the reality capture device 1 comprising a magnetically detachable handle 17. In this embodiment, as the handle is connected to the upper portion 8 of the device, the handle might rotate with the device, when the upper portion 8 rotates about the support axis of rotation 10.

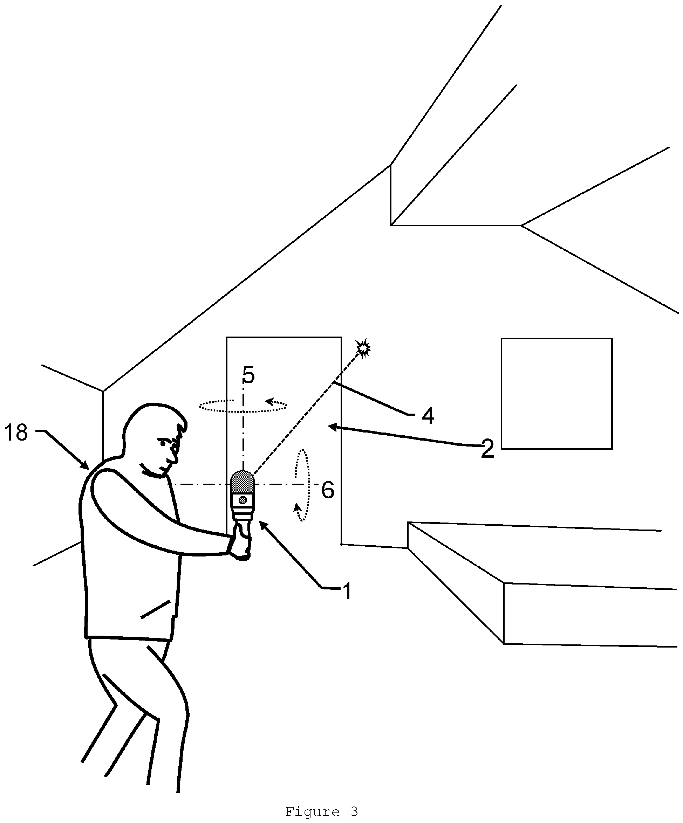

Figure 3 depicts a mobile carrier carrying the reality capture device 1 in a dynamic mode. In the dynamic scanning mode, the laser scanner is configured such that the measurement beam is moved relative to the two rotation axes 5, 6, whereas the upper portion 8 is to be fixed on the support axis 10.

In a third scanning mode, the reality capture device 1 might be configured such that the upper portion 8 rotates about the support axis of rotation 10. This has the effect that the imaging arrangement that is comprised by the upper portion is rotated and images can be taken on a 360-degrees field of view.

Moreover, the laser scanner is configured such that the azimuthal axis of rotation 5 of the laser scanner compensates (at least partially) the rotation of the upper portion about the support axis of rotation. Furthermore, the laser scanner is configured such that the measurement beam 4 is moved relative to the two axis of rotation 5, 6. This configuration allows for an operator 18, as depicted in Figure 3, to carry the reality capture device 1 according to the invention and capture imagery with the imaging arrangement and to take measurements with the laser scanner simultaneously. This allows for relatively short measurements campaigns, as it is not necessary to set up stationary scanning or imaging stations.

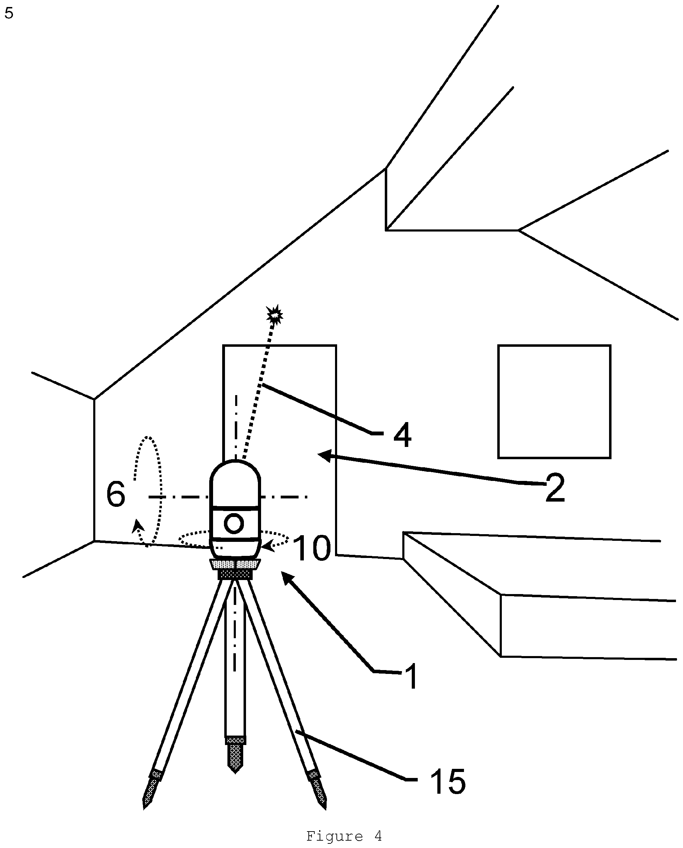

Figure 4 depicts a reality capture device 1 according to Figure 2b as it might be used during static operation. Therefore, the reality capture device might be connected via the interface to a counterpart and positioned in an environment 2 that is to be captured. During the stationary scanning process, the upper portion is configured to rotate about the support axis of rotation 10. The laser scanner is set such that the measurement beam rotates only about one of the two axes of rotation, in particularly the elevation axis 6. Due to the rotation of the upper portion about the support axis of rotation 10, the imaging arrangement is rotated and a 360-degree field of view of the environment can be imaged. Additionally, as the laser scanner is comprised by the upper portion as well, the laser scanner is rotated about the support axis that is coaxial to the azimuthal axis as well.

With the laser scanner being configured to move the measurement beam about one of the two rotational axes, particularly the elevation axis, in combination the laser measurement beam is moved such that the environment can be measured in three dimensions.

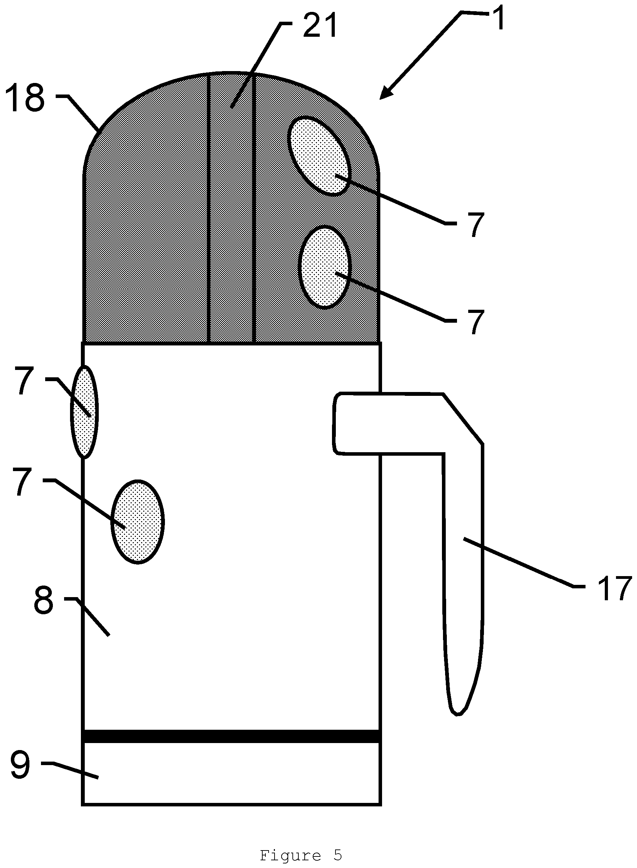

Figure 5 depicts a reality capture device 1 that comprises part of the imaging arrangement 7, in particular a camera, being arranged on the dome 18. In this embodiment, said part of the imaging arrangement 7 is arranged such that its virtual backwards extension passes through a central reference point 19 of the laser scanner, the central reference point defining the origin for distance and angle measurement. The location of the central reference point is specified by the intersection point of the azimuthal axis of rotation with the elevation axis of rotation.

This embodiment of the invention further comprises a reference element 21. The reference element provides at least one of a defined distance in relation to the laser scanner, a reflective intensity, or a contrast value. The laser scanner is configured to carry out the scanning movement in such a way that while doing a complete revolution about one of the two rotation axes (azimuthal axis and elevation axis), it passes over the reference element. The reality capture device is further configured to calibrate and/or adapt the distance measurement based on the measurements of the reference element.

In a further embodiment of the invention, the reality capture device might comprise a user interface 20 that is configured to visualize data. In certain embodiments the user interface comprises an electronic visual display, such as comprised by a tablet.

In certain embodiments the user interface might be fixedly attached to the reality capture device, whereas in other embodiments the user interface might be detachably mounted to the reality capture device. By means of example, the user interface might be attached to the handle of the device.

In other embodiments, the reality capture device might further comprise a transmission means that is configured to transmit data to a user interface. By means of example, the reality capture device might comprise wireless transmission means to transmit the data wirelessly to a user interface, such as a tablet.

In certain embodiments the user interface is configured to visualize the image data that is captured by the imaging arrangement, in particular in real-time. In a further embodiment, the user interface might be configured to visualize a subset of the data in a highlighted manner. In other words, the user interface might be configured to visualize sections of the environment that have already been captured by the imaging arrangement or the laser scanner. In more specific embodiments, the user interface might be configured to provide instructions to the mobile carrier. By means of example, these instructions could comprise navigational instructions for the mobile carrier in order to ensure that the environment is scanned with satisfactory coverage.

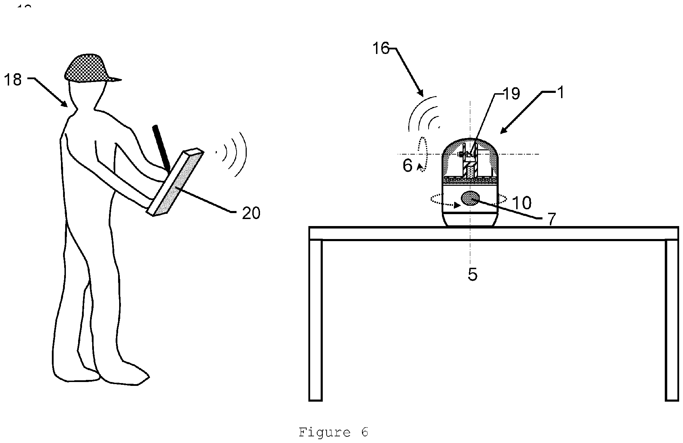

Figure 6 depicts a reality capture device that is positioned on a structure in an environment. In certain embodiments, the reality capture device might receive processing instructions via a transmission means, such as a wireless signal.

Although the invention is illustrated above, partly with reference to some preferred embodiments, it must be understood that numerous modifications and combinations of different features of the embodiments can be made. All of these modifications lie within the scope of the appended claims.

## Claims

1. A reality capture device (1) for generating a digital representation of an environment (2), comprising
• a laser scanner (3) configured to carry out a scanning movement of a laser measurement beam (4) relative to two rotation axes (5, 6), and, based thereof, to generate light detection and ranging data for generating a three-dimensional point cloud,
• an imaging arrangement (7), in particular at least one color camera, for recording image data,
**characterized in that**
the reality capture device comprises an upper portion (8) and a lower portion (9), wherein
• the laser scanner (3) and the imaging arrangement (7) are comprised by the upper portion (8) and arranged such that the scanning movement of the laser measurement beam (4) is provided relative to the upper portion (8), whereas the imaging arrangement (7) is fixedly arranged on the upper portion (8),
• the upper portion (8) is fixed on the lower portion (9) such that it is rotatable about a support rotation axis (10), and
the reality capture device is configured to have two scanning modes, a stationary scanning mode and a dynamic scanning mode, wherein
• in the stationary scanning mode, the upper portion rotates about the support rotation axis relative to the lower portion and the laser scanner is set to move the measurement beam only relative to one of its two rotation axes, and
• in the dynamic scanning mode, the laser scanner is set such that the measurement beam (4) is moved relative to both of the two rotation axes (5, 6), whereas the upper portion (8) is configured to be fixed on the support rotation axis (10) such that it does not rotate about the support rotation axis (10) relative to the lower portion (9).

2. The reality capture device (1) according to claim 1,
wherein the reality capture device (1) is configured to have a third scanning mode, wherein in the third scanning mode the upper portion (8) rotates about the support rotation axis (10) relative to the lower portion (9) and the laser scanner being set such that the measurement beam (4) is moved relative to both of the two rotation axes (5, 6), in particular wherein
• the measurement beam (4) is moved such that the rotation of the upper portion (8) relative to the lower portion (9) is at least partially compensated, and/or
• the imaging arrangement (7) is configured for recording image data simultaneously to moving the measurement beam (4).

3. The reality capture device (1) according to claim 1 or 2, wherein the laser scanner comprises
• a base (11),
• an alidade (12), configured to rotate about one of the two rotation axes (5, 6) of the laser scanner (3), azimuthal axis (5), and
• a rotating body (13), mounted on the alidade (12) and configured to rotate relative to the alidade (12) about the other of the two rotation axes (5, 6) of the laser scanner (3), elevation axis (6), wherein the azimuthal axis (5) and the elevation axis (6) are orthogonal to each other,
wherein the laser scanner (3) is configured that the rotating body (13) is configured for deflecting the laser measurement beam (4) coming from the alidade (12), in particular wherein
• the azimuthal axis (5) is parallel, particularly coaxial, to the support rotation axis (10),
• the imaging arrangement (7) comprises multiple cameras, wherein the cameras are oriented to have a sideways viewing direction, particularly orthogonal to the support rotation axis (10), and/or
• wherein the cameras comprise wide-angle cameras, particularly fish-eye cameras.

4. The reality capture device (1) according to claim 3, wherein the rotational frequencies of the rotating body (13) about the elevation axis of rotation (6) and the azimuthal axis of rotation (5), and the rotational frequency of the upper portion (8) about the support rotation axis (10) depend on the scanning mode, in particular wherein in the stationary scanning mode, a rotation speed of the upper portion (8) about the support rotation axis (10) is relatively slow compared to a rotation speed of the rotating body (13) about the azimuthal axis (5) in the dynamic scanning mode, particularly with less than half of the rotational speed of the elevation axis (6).

5. The reality capture device (1) according to any of the preceding claims, wherein the lower portion (9) comprises an interface (14) configured to be connected to a counterpart (15), particularly wherein the counterpart (15) is embodied as part of a tripod, in particular wherein the reality capture device (1) further comprises a base station, more particularly wherein the base station is embodied as part of a tripod, the base station comprising the counterpart (15), wherein the interface (14) is configured to provide transmission of at least one of electrical signals, optical signals, electrical energy, thermal currents between the base station and the lower (9) and/or upper portion (8).

6. The reality capture device (1) according to claim **5,** further comprising at least one of
• a first power source and a second power source, wherein the first power source is comprised by the upper portion (8) or the lower portion (9) and the second power source is comprised by the base station, in particular wherein the second power source has a larger capacity than the first power source,
• first processing means and second processing means, wherein the first processing means are comprised by the upper portion (8) or the lower portion (9) and the second processing means are comprised by the base station, in particular wherein the second processing means comprise more processing power than the first processing means.

7. The reality capture device (1) according to claims 5 or 6, wherein the reality capture device comprises data transmission means (16), such as wired or wireless transmission means, in particular wherein - if applicable - the data transmission means are comprised by the base station, more particularly wherein the data transmission means comprise at least one of a wireless transmission module, a wired transmission module, or an optical transmission module.

8. The reality capture device (1) according to any of claims 5 to 7, wherein the reality capture device further comprises thermal control means, in particular wherein -if applicable
- at least a part of the thermal control means is comprised by the base station and the reality capture device is configured such that when the reality capture device is connected to the base station via the interface (14), at least parts of the reality capture device (1) are being thermally controlled and/or the thermal control means area operated with higher intensity for the stationary scanning mode.

9. The reality capture device (1) according to any of claims 5 to 8, wherein the device is configured to transmit data and/or energy between the lower portion (9) and the base station via the interface (14), in particular wherein the transmission is initiated automatically after connecting the base with the base station.

10. The reality capture device (1) according to any of claims 5 to 9, wherein the reality capture device (1) comprises a handle (17) for being carried by a mobile carrier (18), wherein the handle (17) is detachably mounted on the lower portion (9) or the interface (14), particularly wherein the handle (17) is magnetically detachable, and/or wherein the handle (17) comprises an additional power source.

11. The reality capture device (1) according to any of the preceding claims, comprising a dome (18), mounted on the upper portion (8) such that the dome (18) and the upper portion (8) encase all moving parts of the laser scanner (3), such that from the outside no moving parts are touchable, in particular wherein
• the dome (18) is opaque for visible light, and/or
• at least part of the imaging arrangement (7), in particular the at least one color camera, is comprised by the dome (18).

12. The reality capture device (1) according to any of the preceding claims, wherein a central reference point of the laser scanner is defined as the origin for distance and angle measurement and by the intersection point of the azimuthal axis of rotation with the elevation axis of rotation, in particular wherein at least part of the imaging arrangement, more particularly the at least one color camera, is arranged such that a virtual backwards extension of its optical axis passes through the central reference point.

13. The reality capture device (1) according to any of the preceding claims, wherein the laser scanner further comprises a reference element (21), wherein the reference element is configured such that it provides at least one of a defined distance in relation to the laser scanner, a reflective intensity, and a contrast value, in particular wherein the laser scanner (3) is configured to carry out the scanning movement of the laser measurement beam (4) in such a way that during a complete revolution about at least one of the two rotational axes (5, 6), the measurement beam passes over the reference element.

14. The reality capture device (1) according to any of the preceding claims, comprising a localization unit, in particular wherein the localization unit comprises an inertial measurement unit, and being configured for generating localization data for determining a trajectory of the reality capture device, in particular wherein
• the localization unit is attached to the upper portion or the lower portion,
• a trajectory is being determined during the dynamic scanning mode, and/or
• the processing means are configured to conduct a simultaneous localization and mapping algorithm, in particular a lidar-based simultaneous localization and mapping algorithm and/or a visual-based simultaneous localization and mapping algorithm.

15. The reality capture device (1) according to any of the preceding claims, wherein the reality capture device is configured to provide
• instructions to the mobile carrier, in particular wherein the instruction comprise navigational information or directions, and/or
• data registration, in particular point-cloud data, when capturing data from more than one of the operation modes.
